# FASCICULE DE BREVET EUROPEEN

(11) **EP 3 219 603 B1**
(45) Date de publication et mention de la délivrance du brevet: **08.04.2020**
(21) Numéro de dépôt: 17161139.5
(22) Date de dépôt: 15.03.2017
(51) Int. Cl.: B64C 1/14, F16D 3/207, F16D 11/14, F16D 63/00

(54) **MÉCANISME DE LIAISON ENTRE UNE PORTE D'AÉRONEF ET UNE STRUCTURE DE L'AÉRONEF, AÉRONEF ET PROCÉDÉ ASSOCIÉS**
VERBINDUNGSMECHANISMUS ZWISCHEN EINER LUFTFAHRZEUGTÜR UND EINER STRUKTUR DES LUFTFAHRZEUGS, ENTSPRECHENDES LUFTFAHRZEUG UND VERFAHREN
CONNECTING MECHANISM BETWEEN AN AIRCRAFT DOOR AND A STRUCTURE OF THE AIRCRAFT, RELATED AIRCRAFT AND METHOD

(30) Priorité: 16.03.2016 FR 1600432
(43) Date de publication de la demande: 20.09.2017
(73) Titulaire: Dassault Aviation, 75008 Paris (FR)
(72) Inventeur: HERAU, Pascal, 65100 GER (FR); DEDIEU, Guillaume, 65000 TARBES (FR)
(74) Mandataire: Lavoix

(56) Documents cités:
- GB-A- 868 390
- US-A- 5 305 969
- US-A1- 2002 139 897
- US-B2- 6 834 834

## Description

La présente invention concerne un mécanisme de liaison entre une porte d'aéronef et une structure de l'aéronef selon la revendication 1.

US 2002/0139897 décrit un mécanisme de liaison entre une porte d'aéronef et une structure de l'aéronef comportant un bras destiné à être articulé sur la structure et un ensemble de liaison rotative entre la porte et le bras.

Un tel mécanisme est destiné à être interposé notamment entre l'ossature de l'aéronef et une porte destinée à obturer une ouverture ménagée dans le fuselage.

L'ouverture est par exemple une ouverture d'accès à la cabine, une ouverture d'accès à une soute à bagages ou/et une ouverture d'accès à un espace technique de l'aéronef.

D'une manière générale, la cabine d'un aéronef est pressurisée. La structure de l'aéronef, notamment son ossature, est donc soumise à des contraintes en torsion et en flexion en fonction des différentes configurations qu'elle occupe au sol et en vol.

Les portes obturant les ouvertures précitées, notamment les portes d'accès à la cabine et les portes de soute sont également soumises à la pressurisation.

Généralement, les portes sont raccordées à la structure de l'aéronef par un bras d'articulation et/ou par des charnières. Pour qu'une porte conserve sa fonction de bouchon étanche pour la pressurisation de la cabine, il est nécessaire qu'elle ne subisse pas les contraintes de torsion et de flexion qui s'appliquent sur l'ossature de l'aéronef. Ceci nécessite un découplage entre la porte et le bras une fois la porte fermée.

Par ailleurs, la liaison entre la porte et le bras doit être robuste pour permettre une mise en place précise de la porte au niveau de l'ouverture, dans l'encadrement situé autour de l'ouverture. Le mécanisme de liaison doit donc présenter une raideur suffisante, notamment au niveau de la liaison entre le bras et la porte pour assurer cette mise en place.

Dans des mécanismes du type précité, le bras est articulé sur l'ossature de l'aéronef. La porte d'aéronef est par ailleurs articulée sur le bord libre du bras. Ceci permet la mise en place de la porte dans son encadrement.

En outre, la porte est souvent mobile en translation par rapport au bras pour permettre notamment le passage de la porte derrière des butées de pressurisation, dans le cas de butées fixes.

Dans un mécanisme connu, le bras est équipé à une de ses extrémités d'un parallélogramme déformable assurant le guidage dans la phase d'accostage ou de retrait des butées de pressurisation.

L'exigence de guidage précis de la porte est cependant contradictoire avec la nécessité de découpler la porte du mécanisme de liaison une fois la porte fermée.

Pour pallier ce problème, le découplage est réalisé par exemple par des éléments déformables élastomères qui sont disposés soit au niveau des liaisons pivot entre le bras et la porte, soit intercalés entre la porte et ses supports de guidage.

Une telle solution ne donne pas entière satisfaction. L'insertion des éléments élastomères produit une perte de précision de guidage en phase d'ouverture ou de fermeture de la porte. De plus, la transmission des actions mécaniques entre l'ossature de l'aéronef et la porte n'est pas totalement supprimée. Cette transmission résiduelle varie en outre en fonction de la température et de la pression, en particulier lorsqu'un amortisseur élastomère est utilisé, puisque l'élastomère durcit à basse température.

Un but de l'invention est donc de fournir un mécanisme de liaison entre une porte d'aéronef et une structure de l'aéronef qui permette un guidage précis de la porte, notamment en phase d'ouverture ou de fermeture, tout en minimisant la transmission des actions mécaniques entre l'ossature de l'aéronef et la porte lorsque la porte est fermée.

À cet effet, l'invention a pour objet un mécanisme selon la revendication 1.

Le mécanisme selon l'invention peut comprendre l'une ou plusieurs des caractéristiques des revendications 2 à 9, prise(s) isolément ou suivant toute combinaison techniquement possible.

L'invention a également pour objet un aéronef selon la revendication 10.

L'invention a également pour objet un procédé selon la revendication 11 ou 12.

L'invention sera mieux comprise à la lecture de la description qui va suivre, donnée uniquement à titre d'exemple, et faite en se référant aux dessins annexés, sur lesquels :
- la figure 1 est une vue partiellement en perspective illustrant une porte d'un aéronef selon l'invention et son mécanisme de liaison sur la structure de l'aéronef ;
- la figure 2 est une vue agrandie d'un détail marqué II de la figure 1 illustrant le mécanisme de liaison de la figure 1 ;
- la figure 3 est une vue de l'ensemble de liaison rotative entre le bras et la porte, dans une configuration de liaison de la porte avec le bras, lorsque la porte est ouverte ;
- la figure 4 est une vue analogue à la figure 3, dans une configuration de désolidarisation de la porte avec le bras, lorsque la porte est fermée ;
- la figure 5 est une vue d'un détail marqué V sur la figure 4 ;
- la figure 6 est une vue de côté en perspective de l'ensemble de liaison rotative, illustrant des éléments de blocage de l'ensemble de liaison rotative dans la configuration de liaison entre la porte et le bras ;
- la figure 7 est une vue en perspective d'un détail des éléments de blocage de l'ensemble de liaison rotative dans la configuration de liaison.

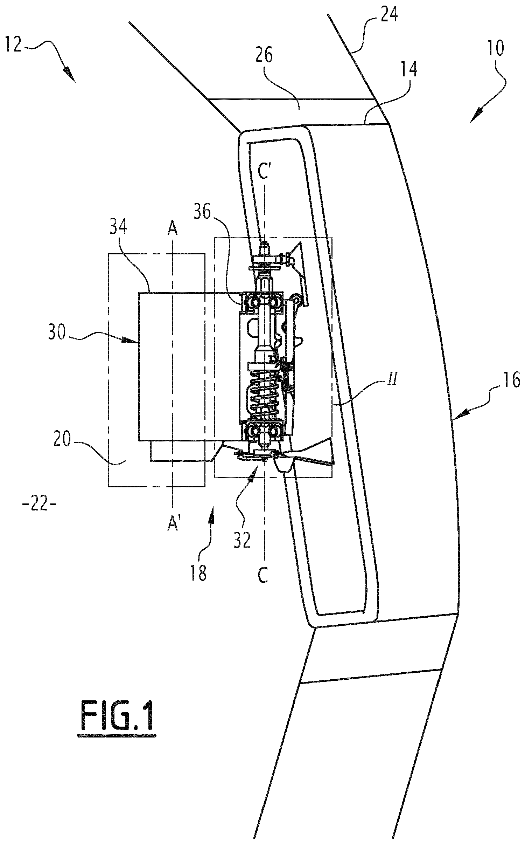

Un premier aéronef 10 selon l'invention est illustré partiellement sur la figure 1. L'aéronef 10 comporte une structure 12 délimitant au moins une ouverture 14, et une porte 16, mobile entre une position ouverte d'accès à l'ouverture 14 et une position fermée d'obturation de l'ouverture 14.

L'aéronef 10 comporte en outre un mécanisme 18 de liaison entre la porte 16 et la structure 12, un mécanisme (non représenté) de manœuvre de la porte entre sa position ouverte et sa position fermée et un mécanisme (non représenté) de verrouillage de la porte 16 dans sa position fermée.

La structure 12 comporte de manière connue une ossature interne 20 définissant un volume intérieur 22 et une peau extérieure 24 à travers laquelle est ménagée l'ouverture 14.

Le volume intérieur 22 est par exemple une cabine de l'aéronef destinée à recevoir des occupants de l'aéronef, comprenant l'équipage et/ou les passagers, une soute à bagages destinée à recevoir des bagages et/ou du fret, ou une soute technique destinée à recevoir des équipements destinés au fonctionnement de l'aéronef 10.

L'ouverture 14, lorsqu'elle est dégagée, permet d'accéder au volume intérieur 22 depuis l'extérieur de l'aéronef 10.

La peau extérieure 24 comporte un encadrement 26 disposé à la périphérie de l'ouverture 14, destiné à recevoir la porte 16 dans sa position fermée. L'encadrement 26 comporte par exemple des butées de pressurisation (non représentées).

La porte 16 est formée par un panneau obturant totalement l'ouverture 14 dans la position fermée.

Depuis la position fermée illustrée sur la figure 1, et comme on le verra plus bas, la porte 16 est mobile en translation verticale entre la position fermée et une position intermédiaire d'ouverture, pour se dégager des butées de pressurisation. Elle est ensuite mobile en translation horizontale et en rotation autour d'un axe vertical depuis la position intermédiaire d'ouverture jusqu'à la position ouverte par l'intermédiaire du mécanisme de liaison 18.

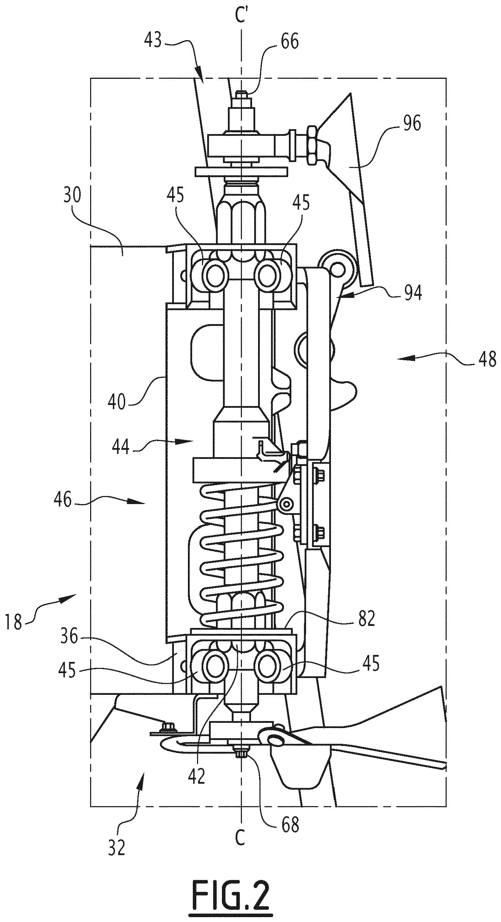

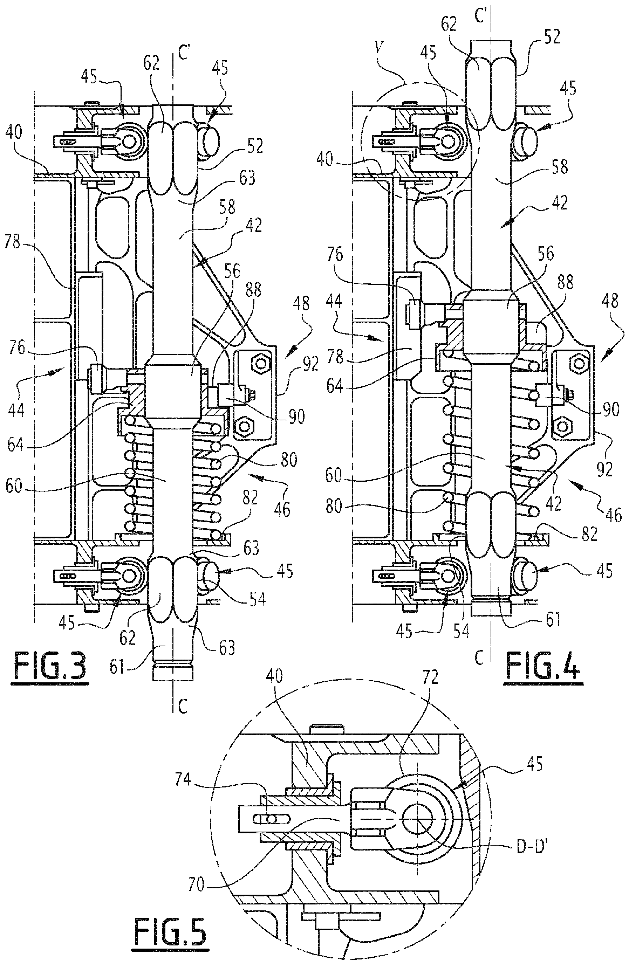

En référence aux figures 1 et 2, le mécanisme de liaison 18 comporte un bras de liaison 30 monté de manière rotative sur la structure 12, et selon l'invention, un ensemble de liaison rotative 32 avec la porte 16, qui est débrayable depuis une configuration de liaison de la porte 16 avec le bras 30, visible sur la figure 4, vers une configuration de désolidarisation de la porte 16 avec le bras 30.

Le bras 30 présente de manière connue une forme courbée en J. Il présente un bord intérieur 34 monté pivotant sur la structure 12 autour d'un axe vertical A-A' et un bord extérieur 36 sur lequel est monté l'ensemble de liaison rotative 32.

En référence à la figure 2, l'ensemble de liaison rotative 32 comporte un cadre de support 40 monté fixe sur le bord extérieur 36 du bras 30, un arbre 42 monté mobile en translation par rapport au bras 30 le long d'un axe C-C' de déplacement parallèle à l'axe de rotation du bras 30 et des éléments 43 de raccordement de l'arbre 42 à la porte 16.

L'ensemble de liaison rotative 32 comporte en outre au moins un organe d'appui 45 sur l'arbre 42, un ensemble 44 d'indexation de l'arbre 42 par rapport au bras 30, un élément 46 de sollicitation élastique de l'arbre 42, et des éléments 48 de blocage sélectif de l'arbre 42.

En référence aux figures 3 et 4, l'arbre 42 s'étend suivant son axe C-C' de déplacement en translation. Il est mobile en translation entre une première position liée au bras 30, illustrée sur la figure 3 et une deuxième position libérée par rapport au bras 30, illustrée sur la figure 4.

L'arbre 42 comporte au moins une région 52, 54 de coopération avec un organe d'appui 45, au moins une région centrale 56 de coopération avec les éléments de blocage 48 et au moins une région 58, 60, 61 amincie de libération de l'arbre 42.

Dans cet exemple, l'arbre 42 comporte une région supérieure 52 de coopération et une région inférieure 54 de coopération situées respectivement au voisinage de ses extrémités. Il comporte une première région amincie 58 située entre la région supérieure 52 et la région centrale 56, une deuxième région amincie 60, située entre la région centrale 56 et la région inférieure 54 et une troisième région amincie 61 située sous la région de coopération 54.

L'étendue transversale maximale de chaque région de coopération 52, 54 est supérieure à l'étendue transversale maximale de chaque région amincie 58, 60, 61.

Chaque région de coopération 52, 54 comporte une surface 62 de coopération avec un organe d'appui 45. Dans cet exemple, les surfaces de coopération 62 sont formées par des méplats. Elles sont réparties angulairement autour de l'axe C-C'.

La région centrale 56 présente une collerette 64. L'étendue transversale maximale de la collerette 64 est supérieure à celle de chaque région de coopération 52, 54

Avantageusement, chaque région amincie 58, 60, 61 présente une transition continue 63 d'étendue transversale croissante avec chaque région de coopération 52, 54.

En référence à la figure 2, les éléments de raccordement 43 comportent une liaison rotule 66, 68 entre la porte 16 et chaque extrémité de l'arbre 42.

Dans l'exemple représenté sur les figures, l'ensemble de liaison rotatif 32 comporte une pluralité d'organes d'appui 45.

Il comporte en particulier un groupe d'organes d'appui 45 associé respectivement à chaque région de coopération 52, 54. L'ensemble 32 comprend ainsi de préférence au moins un premier groupe d'organes d'appui 45 destinés à coopérer avec la région supérieure de coopération 52 et au moins un deuxième groupe d'organes d'appui 45 destinés à coopérer avec la région inférieure 54.

Dans cet exemple, les organes d'appui 45 s'étendent radialement vers l'axe de déplacement C-C'. Comme illustré sur la figure 5, chaque organe d'appui 45 comporte un galet rotatif 72 autour d'un axe horizontal D-D' perpendiculaire à l'axe de déplacement C-C'.

Chaque organe d'appui 45 est propre à s'appuyer sur une surface de coopération 62 d'une région de coopération 52, 54 dans la première position illustrée sur la figure 3, pour immobiliser l'arbre 42 transversalement par rapport à l'axe C-C' par rapport au bras 30. Ainsi, la liaison entre la porte 16 et le bras 30 est rigidifiée.

Chaque organe d'appui 45 est propre à être disposé en regard d'une région amincie 58, 61, à l'écart de l'arbre 42 dans la deuxième position illustrée sur la figure 4, pour désolidariser l'arbre 42 du bras 30, évitant ainsi la transmission des mouvements entre le bras 30 est la porte 16.

Avantageusement, comme illustré par la figure 5, la position radiale d'au moins un organe d'appui 45 de chaque groupe d'organes d'appui 45 est ajustable par l'intermédiaire d'un mécanisme d'ajustement 74 pour régler la force de rigidification de l'arbre 42 par rapport au bras 30. A cet effet, l'organe d'appui 45 comporte un support 70 monté mobile sur le cadre 40 par l'intermédiaire du mécanisme d'ajustement 74, le galet rotatif 72 étant monté rotatif sur le support 70 autour de l'axe D-D'.

L'ensemble d'indexation 44 est propre à immobiliser en rotation l'arbre 42 autour de son axe de déplacement C-C'. En référence à la figure 3, il comporte par exemple un galet 76 déplaçable conjointement avec l'arbre 42 et une glissière 78 solidaire du cadre 40 recevant le galet 76.

L'organe de sollicitation élastique 46 est destiné à solliciter en permanence l'arbre 42 vers la deuxième position. Il comporte par exemple un ressort hélicoïdal 80.

L'organe de sollicitation élastique 46 est par exemple interposé longitudinalement entre la région centrale 56 et un siège fixe 82 solidaire du cadre 40. Il s'étend autour de l'arbre 42.

L'organe de sollicitation élastique 46 est propre à développer une force dirigée vers le haut pour compenser la masse de la porte 16 et diminuer ainsi les efforts de manœuvre.

Les éléments de blocage 48 sont propres à immobiliser l'arbre 42 en translation le long de l'axe de déplacement C-C' dans la première position, dans la configuration de liaison de la porte 16 avec le bras 30, à l'encontre de l'organe de sollicitation élastique 46.

Les éléments de blocage 48 comportent une piste 88 solidaire de l'arbre 42, une butée mobile 90 propre à être insérée dans la piste 88, et un support de butée 92 articulé sur le bras 30 autour d'un axe parallèle à l'axe de déplacement C-C'.

En référence à la figure 2, les éléments de blocage 48 comportent en outre un organe de commande 94 du déplacement de la butée 90, propre à être actionné par la porte 16, et un chemin 96 de coopération avec l'organe de commande 94, solidaire de la porte 16.

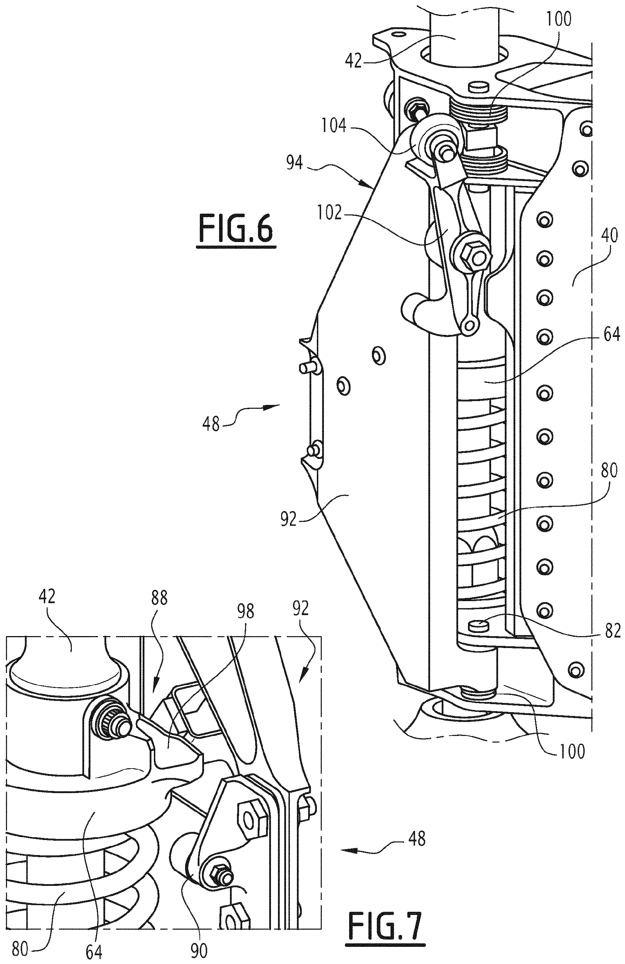

Comme illustré par la figure 7, la piste 88 est formée par une rainure sensiblement circonférentielle disposée à la périphérie de la collerette 64. La piste 88 est délimitée vers l'extérieur par un ergot 98 formant rebord, permettant le blocage latéral de la butée 90.

La butée 90 comporte ici un galet propre à s'insérer dans la rainure. Elle est montée fixe sur une face du support de butée 92 située en regard de l'arbre 42.

Le support de butée 92 comporte ici une plaque disposée parallèle à l'arbre 42. Le support de butée 92 est articulé sur des axes parallèles à l'axe de déplacement C-C' munis de ressorts de sollicitation élastique.

Ainsi, le support de butée 92 et la butée 90 sont déplaçables par pivotement autour d'un axe parallèle à l'axe de déplacement C-C' entre une position de repos située au voisinage de l'arbre 42, visible sur la figure 6, et une position écartée de l'arbre 42, permettant le passage de l'arbre 42 de la première position à la deuxième position.

L'organe de commande 94 comporte une tige 102 articulée à l'arrière du support de butée 92 sur une face opposée à la face portant la butée 90. La tige 102 présente à une première extrémité un galet 104, propre à coopérer avec le chemin 96 présent sur la porte 16 pour écarter le support 92 et la butée 90 de l'arbre 42 lors du déplacement de la porte 16 de la position intermédiaire à la position fermée, et les rapprocher de l'arbre 42 dans la position fermée, comme dans la position ouverte de la porte 16.

Le fonctionnement du mécanisme de liaison 18, lors de la fermeture d'une porte 16 de l'aéronef 10 va maintenant être décrit.

Initialement, la porte 16 occupe sa position totalement ouverte. Dans cette position, l'ensemble de liaison rotative 32 est dans sa configuration de liaison entre la porte 16 et le bras 30.

Dans cette configuration, comme illustré par la figure 3, l'arbre 42 occupe sa première position. Chaque région de coopération 52, 54 est disposée en regard d'un groupe d'organes d'appui 45. Les galets 72 des organes d'appui 45 s'appuient sur les surfaces de coopération 62 et immobilisent latéralement l'arbre 42, en le maintenant centré sur son axe de déplacement C-C'.

L'ensemble d'indexation 44 bloque la rotation de l'arbre 42 autour de son axe de déplacement C-C'.

L'organe de sollicitation élastique 46 est comprimé. L'organe de commande 94 est situé à l'écart de la porte 16. Le support 92 et la butée 90 occupent alors la position rapprochée de l'arbre 42. La butée 90 est insérée dans la piste 88 et bloque en translation l'arbre 42 le long de son axe de déplacement C-C'. Elle est retenue latéralement dans la piste 88 par l'ergot 98

La liaison mécanique entre la porte 16 et le bras 30 est donc rigidifiée. Cette liaison reste pivotante par l'intermédiaire des rotules 66, 68 permettant un débattement angulaire de la porte 16 pour libérer l'ouverture 14.

De même, le bras 30 est libre de pivoter par rapport à la structure 12 autour de l'axe vertical A-A' passant par son bord intérieur 34.

Lorsque la porte 16 doit être fermée, le bras 30 et la porte 16 sont pivotés par l'intermédiaire du mécanisme de manœuvre (non représenté) pour rapprocher la porte 16 de l'encadrement 26 et l'insérer dans l'encadrement 26.

Lorsque la porte 16 entre en contact avec l'encadrement 26, elle occupe sa position intermédiaire. Dans cette position, le galet 104 de l'organe de commande 94 entre en contact avec le chemin 96 sur la porte 16 provoquant l'écartement du support 92 et de la butée 90 par rapport à l'arbre 42 et la libération de la butée 90 hors de la piste 88.

Le mouvement vertical pour libérer la butée 90 de la piste 88 est induit par le mécanisme de manœuvre.

Ensuite, la porte 16 est déplacée en translation vers le haut par le mécanisme de verrouillage (non représenté) pour se fixer dans l'encadrement 26, notamment derrière des butées de pressurisation. Elle occupe sa position fermée dans laquelle elle obture l'ouverture 14.

Lors de ce déplacement, l'arbre 42 remonte jusqu'à la deuxième position en étant aidé par l'organe de sollicitation élastique 46 compensant au moins en partie le poids de la porte 16. Chaque organe d'appui 45 passe alors en regard d'une région amincie 58, 61 en se plaçant totalement à l'écart de l'arbre 42.

Le support 92 et la butée 90 basculent alors de nouveau vers leur position rapprochée de l'arbre 42 et la butée 90 se place sous la collerette 64.

L'arbre 42 est totalement désolidarisé du bras 30. Un jeu supérieur au déplacement relatif entre la porte 16 et le bras 30 dans tous les cas de charge vol et sol est créé entre l'arbre 42 et les organes d'appui 45.

Ainsi, l'ensemble de liaison rotative 32 occupe sa configuration de désolidarisation de la porte 16 par rapport au bras 30, dans laquelle la liaison mécanique entre le bras 30 et la porte 16 est rompue.

Pour rouvrir la porte 16, les étapes précédentes sont réalisées à l'inverse en déplaçant en translation la porte de sa position fermée à sa position intermédiaire, ce qui passe l'ensemble de liaison rotative de la configuration de désolidarisation à la configuration de liaison, puis en pivotant et en écartant la porte 16 et le bras 30 pour atteindre la position ouverte.

Le découplage mécanique entre la porte 16 et le bras 30 est donc réalisé de manière totale dans la position fermée de la porte 16, sans qu'il soit nécessaire d'insérer des éléments élastomères entre la porte 16 et l'ossature interne 20, ou au niveau de l'ensemble de liaison rotative 32. Ce découplage mécanique ne dépend plus de la température, notamment en vol. Les charges, les mouvements et les vibrations ne sont pas transmises de l'ossature 20 à la porte 16.

Cet effet avantageux est obtenu sans dégrader le guidage mécanique entre le bras 30 et la porte 16, lorsque la porte 16 occupe sa position ouverte. Au contraire, ce guidage est rigidifié notamment par la présence d'organes d'appui 45 coopérant avec l'arbre 42.

Le mécanisme de liaison 18 est en outre compact et regroupe les fonctions de rigidification et de découplage.

La présence d'un organe de sollicitation élastique 46 assure en outre une compensation de masse facilitant la manœuvre de la porte 16 depuis sa position intermédiaire d'insertion dans l'encadrement 26 vers sa position fermée.

## Revendications

1. Mécanisme (18) de liaison entre une porte (16) d'aéronef et une structure (12) de l'aéronef, comportant :
- un bras (30) destiné à être articulé sur la structure (12) ;
- un ensemble de liaison rotative (32) entre la porte (16) et le bras (30) ;
dans lequel l'ensemble de liaison rotative (32) est débrayable depuis une configuration de liaison de la porte (16) avec le bras (30) dans une position ouverte de la porte (16), vers une configuration de désolidarisation de la porte (16) par rapport au bras (30), dans une position fermée de la porte (16),
dans lequel l'ensemble de liaison rotative (32) comporte un arbre (42) mobile en translation par rapport au bras (30) le long d'un axe de déplacement (C-C') entre une première position liée au bras (30) dans la configuration de liaison et une deuxième position libérée par rapport au bras (30) dans la configuration de désolidarisation, dans lequel l'ensemble de liaison rotative (32) comporte au moins un organe d'appui (45) fixé sur le bras (30), l'arbre (42) définissant au moins une région de coopération (52, 54) avec l'organe d'appui (45), l'organe d'appui (45) s'appliquant sur la région de coopération (52, 54) dans la première position, l'organe d'appui (45) étant disposé totalement à l'écart de l'arbre (42) dans la deuxième position, et **caractérisé en ce que** l'arbre (42) comporte au moins une région amincie (58, 60) adjacente à la région de coopération (52, 54), l'organe d'appui (45) étant disposé en regard de la région amincie (58, 60), à l'écart de celle-ci dans la deuxième position.

2. Mécanisme (18) selon la revendication 1, dans lequel l'organe d'appui (45) comporte un galet rotatif (72) propre à rouler sur la région de coopération (52, 54) lors du déplacement de l'arbre (42) de la première position à la deuxième position.

3. Mécanisme (18) selon l'une quelconque des revendications 1 ou 2, comportant au moins une butée (90) de blocage de l'arbre (42) dans la première position, l'arbre (42) définissant une piste (88) de coopération avec la butée (90), la butée (90) étant engagée sur la piste (88) dans la configuration de liaison et étant désengagée de la piste (88) dans la configuration de désolidarisation.

4. Mécanisme (18) selon la revendication 3, comportant un organe (94) de commande du désengagement de la butée (90) hors de la piste (88), propre à coopérer avec la porte (16) lors du passage de la porte (16) de la position ouverte à la position fermée.

5. Mécanisme (18) selon l'une quelconque des revendications 3 ou 4, dans lequel la piste (88) définit un ergot (98) de blocage latéral de la butée (90), coopérant avec la butée (90) lorsque la butée (90) est engagée sur la piste (88).

6. Mécanisme (18) selon l'une quelconque des revendications 3 à 5, comprenant un support de butée (92) monté pivotant sur le bras (30) autour d'un axe parallèle à l'axe de déplacement C-C' de l'arbre (42).

7. Mécanisme (18) selon l'une quelconque des revendications 1 à 5, comprenant un organe de sollicitation élastique (46) de l'arbre (42) vers la deuxième position.

8. Mécanisme (18) selon l'une quelconque des revendications 1 à 6, comprenant une première liaison rotule (66) entre l'arbre (42) et la porte (16) et une deuxième liaison rotule (68) entre l'arbre (42) et la porte (16), les liaisons rotule (66, 68) étant disposées aux extrémités axiales de l'arbre (42).

9. Mécanisme (18) selon l'une quelconque des revendications 1 à 7, comprenant un ensemble (44) d'indexation angulaire de l'arbre (42) par rapport au bras (30).

10. Aéronef (10), comportant :
- une structure (12) définissant au moins une ouverture (14) ;
- une porte (16) d'obturation de l'ouverture (14), montée mobile par rapport à la structure (12) entre une position ouverte et une position fermée ;
- un mécanisme (18) selon l'une quelconque des revendications précédentes, le bras (30) étant monté rotatif sur la structure (12), la porte (16) étant raccordée au bras (30) par l'intermédiaire de l'ensemble de liaison rotative (32).

11. Procédé de manipulation d'une porte (16) d'aéronef comprenant les étapes suivantes :
- fourniture d'un aéronef (10) selon la revendication 10, la porte (16) occupant une position ouverte ;
- déplacement de la porte (16) vers la position fermée, par rotation du bras (30) par rapport à la structure (12) et/ou de la porte (16) par rapport au bras (30), l'ensemble de liaison rotative (32) occupant sa configuration de liaison ;
- débrayage de l'ensemble de liaison rotative (32) pour le passer dans sa configuration de désolidarisation.

12. Procédé selon la revendication 11, dans lequel le débrayage de l'ensemble de liaison comporte (16) le déplacement en translation de la porte (16) par rapport au bras (30).

## Patentansprüche

1. Mechanismus (18) zur Verbindung zwischen einer Luftfahrzeugtür (16) und einer Luftfahrzeugstruktur (12), aufweisend:
- einen Arm (30), der dazu bestimmt ist, mit der Struktur (12) gelenkverbunden zu sein,
- eine Einrichtung zur Drehverbindung (32) zwischen der Tür (16) und dem Arm (30),
wobei die Einrichtung zur Drehverbindung (32) ausrückbar ist von einer Konfiguration der Verbindung der Tür (16) mit dem Arm (30) in einer Geöffnet-Position der Tür (16) aus zu einer Konfiguration der Trennung der Tür (16) bezüglich des Arms (30) in einer Geschlossen-Position der Tür (16) hin,
wobei die Einrichtung zur Drehverbindung (32) aufweist ein Achsenteil (42), das translationsbewegbar ist bezüglich des Arms (30) entlang einer Verlagerungsachse (C-C') zwischen einer ersten Position verbunden mit dem Arm (30) in der Konfiguration der Verbindung und einer zweiten Position freigegeben bezüglich des Arms (30) in der Konfiguration der Trennung,
wobei die Einrichtung zur Drehverbindung (32) wenigstens ein Auflageorgan (45) aufweist, das an dem Arm (30) fixiert ist,
wobei das Achsenteil (42) wenigstens einen Bereich zur Zusammenwirkung (52, 54) mit dem Auflageorgan (45) definiert,
wobei das Auflageorgan (45) in der ersten Position auf dem Bereich zur Zusammenwirkung (52, 54) aufliegt, wobei das Auflageorgan (45) in der zweiten Position komplett im Abstand von dem Achsenteil (42) ist,
und **dadurch gekennzeichnet, dass** das Achsenteil (42) wenigstens einen dünnen Bereich (58, 60) benachbart zu dem Bereich zur Zusammenwirkung (52, 54) aufweist, wobei das Auflageorgan (45) in der zweiten Position dem dünnen Bereich (58, 60) im Abstand zu diesem gegenüberliegt.

2. Mechanismus (18) gemäß Anspruch 1, wobei das Auflageorgan (45) eine drehbare Laufrolle (72) aufweist, die imstande ist, auf dem Bereich zur Zusammenwirkung (52, 54) zu rollen während der Verlagerung des Achsenteils (42) von der ersten Position zur zweiten Position.

3. Mechanismus (18) gemäß irgendeinem der Ansprüche 1 oder 2, aufweisend wenigstens einen Anschlag (90) zur Blockierung des Achsenteils (42) in der ersten Position, wobei das Achsenteil (42) eine Bahn (88) zur Zusammenwirkung mit dem Anschlag (90) definiert, wobei der Anschlag (90) mit der Bahn (88) in Eingriff ist in der Konfiguration zur Verbindung und von der Bahn (88) außer Eingriff ist in der Konfiguration zur Trennung.

4. Mechanismus (18) gemäß Anspruch 3, aufweisend ein Organ (94) zur Steuerung des Außer-Eingriff-Bringens des Anschlags (90) aus der Bahn (88), das imstande ist, mit der Tür (16) zusammenzuwirken während des Übergangs der Tür (16) von der Geöffnet-Position in die Geschlossen-Position.

5. Mechanismus (18) gemäß irgendeinem der Ansprüche 3 oder 4, wobei die Bahn (88) eine seitliche Klaue (98) zur Blockierung des Anschlags (90) definiert, die mit dem Anschlag (90) zusammenwirkt, wenn der Anschlag (90) mit der Bahn (88) im Eingriff ist.

6. Mechanismus (18) gemäß irgendeinem der Ansprüche 3 bis 5, aufweisend einen Anschlag-Halter (92), der an dem Arm (30) um eine Achse schwenkbar montiert ist, die parallel zu der Verlagerungsachse C-C' des Achsenteils (42) ist.

7. Mechanismus (18) gemäß irgendeinem der Ansprüche 1 bis 5, aufweisend ein Organ zur elastischen Vorspannung (46) des Achsenteils (42) zu der zweiten Position hin.

8. Mechanismus (18) gemäß irgendeinem der Ansprüche 1 bis 6, aufweisend eine Kugelgelenkverbindung (66) zwischen dem Achsenteil (42) und der Tür (68) und eine zweite Kugelgelenkverbindung (68) zwischen dem Achsenteil (42) und der Tür (16), wobei die Kugelgelenkverbindungen (66, 68) an den axialen Enden des Achsenteils (42) angeordnet sind.

9. Mechanismus (18) gemäß irgendeinem der Ansprüche 1 bis 7, aufweisend eine Einrichtung (44) zur Winkelindexierung des Achsenteils (42) bezüglich des Arms (30).

10. Luftfahrzeug (10) mit:
- einer Struktur (12), die wenigstens eine Öffnung (14) definiert,
- einer Tür (16) zur Verschließung der Öffnung (14), die bezüglich der Struktur (12) bewegbar montiert ist zwischen einer Geöffnet-Position und einer Geschlossen-Position,
- einem Mechanismus (18) gemäß irgendeinem der vorhergehenden Ansprüche, wobei der Arm (30) an der Struktur (12) drehbar montiert ist, wobei die Tür (16) mit dem Arm (30) verbunden ist mittels der Einrichtung zur Drehverbindung (32).

11. Verfahren zur Betätigung einer Luftfahrzeug-Tür (16), mit den folgenden Schritten:
- Bereitstellen eines Luftfahrzeugs (10) gemäß Anspruch 10, wobei die Tür (16) eine Geöffnet-Position einnimmt,
- Verlagerung der Tür (16) zu der Geschlossen-Position hin durch Drehung des Arms (30) bezüglich der Struktur (12) und/oder der Tür (16) bezüglich des Arms (30), wobei die Einrichtung zur Drehverbindung (32) ihr Konfiguration zur Verbindung einnimmt,
- Ausrücken der Einrichtung zur Drehverbindung (32), um sie in ihre Konfiguration zur Freigabe zu überführen.

12. Verfahren gemäß Anspruch 11, wobei das Ausrücken der Einrichtung zur Verbindung aufweist (16) das Translationsverlagern der Tür (16) bezüglich des Arms (30).

## Claims

1. A connecting mechanism (18) between an aircraft door (16) and a structure (12) of the aircraft comprising:
- an arm (30) intended to be hinged on to the structure (12);
- a rotating connection assembly (32) between the door (16) and the arm (30);
in which the rotating connection assembly (32) may be disengaged from a connection configuration for connecting the door (16) with the arm (30) in an open position of the door (16), into an uncoupling configuration for uncoupling of the door (16) from the arm (30), in a closed door position of the door (16),
in which the rotating connection assembly (32) includes a movable shaft (42) that is movable in translational motion in relation to the arm (30) along an axis of movement (C-C') between a first connected position connected to the arm (30) in the connection configuration and a second released position released from the arm (30) in the uncoupling configuration,
in which the rotating connection assembly (32) includes at least one support member (45) fixed on to the arm (30), the shaft (42) defining at least one region of cooperation (52, 54) for cooperating with the support member (45), the support member (45) being applied on to the region of cooperation (52, 54) in the first position, the support member (45) being entirely disposed apart from the shaft (42) in the second position,
and **characterized in that** the shaft (42) comprises at least one narrowed region (58, 60) adjacent to the cooperation region (52, 54), the support member (45) being disposed so as to face the narrowed region (58, 60), apart from the latter in the second position.

2. The mechanism (18) according to claim 1, in which the support member (45) includes a rotating roller (72) capable of rolling over the region of cooperation (52, 54) during the movement of the shaft (42) from the first position to the second position.

3. The mechanism (18) according to claim 1 or 2, including at least one locking stop (90) for locking the shaft (42) in the first position, the shaft (42) defining a track (88) for cooperating with the stop (90), with the stop (90) being engaged on to the track (88) in the connection configuration and being disengaged from the track (88) in the uncoupling configuration.

4. The mechanism (18) according to claim 3, including a disengagement control member (94) for controlling the disengaging of the stop (90) out of the track (88), that is capable of cooperating with the door (16) during the passing of the door (16) from the open position to the closed position.

5. The mechanism (18) according to any one of claims 3 or 4, in which the track (88) defines a blocking tab lug (98) for lateral blocking of the stop (90), which cooperates with the stop (90) when the stop (90) is engaged on to the track (88).

6. The mechanism (18) according to any one of the claims 3 to 5, including a stop support (92) mounted so as to be pivotable on the arm (30) around an axis that is parallel to the axis of movement C-C' of the shaft (42).

7. The mechanism (18) according to any one of claims 1 to 5, including a resilient biasing member (46) for resiliently biasing the shaft (42) to the second position.

8. The mechanism (18) according to any one of claims 1 to 6, including a first ball-joint connection (66) between the shaft (42) and the door (16) and a second ball-joint connection (68) between the shaft (42) and the door (16), the ball-joint connections (66, 68) being arranged at the axial ends of the shaft (42).

9. The mechanism (18) according to any one of claims 1 to 7, including an angular indexation assembly (44) for angular indexing of the shaft (42) in relation to the arm (30).

10. An aircraft (10), including:
- a structure (12) defining at least one opening (14);
- a door (16) for closing off the opening (14), that is mounted to be movable in relation to the structure (12) between an open position and a closed position;
- a mechanism (18) according to any one of the preceding claims, with the arm (30) being mounted so as to be rotating over the structure (12), the door (16) being connected to the arm (30) by means of the rotating connection assembly (32).

11. A method for operating an aircraft door (16) including the following steps:
- providing an aircraft (10) according to claim 10, with the door (16) being in the open position;
- moving of the door (16) to the closed position, by rotating the arm (30) in relation to the structure (12) and/or rotating the door (16) in relation to the arm (30), with the rotating connection assembly (32) being in its connection configuration.
- disengaging of the rotating connection assembly (32) in order for it to pass into its uncoupling configuration.

12. The method according to claim 11, in which the disengaging of the rotating connection assembly (16) includes the moving in translational motion of the door (16) in relation to the arm (30).
